# EUROPÄISCHE PATENTANMELDUNG

(11) **EP 1 386 785 A1**
(43) Veröffentlichungstag der Anmeldung: **04.02.2004**
(21) Anmeldenummer: 03016811.6
(22) Anmeldetag: 23.07.2003
(51) Int. Cl.: B60R 9/06

(54) **Heckträger zur Anbringung im unteren Bereich der Heckscheibe eines Fahrzeugs**

(30) Priorität: 24.07.2002 DE 10233746
(71) Anmelder: Webasto Vehicle Systems International GmbH, 82131 Stockdorf (DE)
(72) Erfinder: De Gaillard, Francois, 85390 Mouilleron en Pareds (FR); De Waal, Martin, 1566 TS Assendelft (NL); Guicheteau, Jean-Luc, 49300 Cholet (FR); Kimoto, Izumi, Saeki-gun, 739-0413 Hiroshima-ken (JP); Kölbl, Michael, 82061 Neuried (DE); Schönauer, Miriam, 85405 Nandlstadt (DE); Pollack, Martin, 82178 Puchheim (DE); Righetti, Claudio Ivano, 10139 Torino (IT); Mitterbauer, Peter, 4810 Gmunden (AT); Ueki, Sigeru, 739-2115 Higashihiroshima-City (JP); Vecchioni, Bernhard, Oxford, Michigan 48371 (US)
(74) Vertreter: Bedenbecker, Markus

(57) **Zusammenfassung**

Die Erfindung betrifft ein Rahmenelement (1) zur Anbringung im unteren Bereich (15) der Heckscheibe (6) eines Fahrzeugs (2), wobei das Rahmenelement (1) in einer ersten Anbringungsposition die Heckscheibe (6) umrahmend am Fahrzeug (2) anbringbar und in einer zweiten Anbringungsposition im wesentlichen horizontal zur Verwendung als Gepäckträger am Fahrzeug (2) anbringbar ist.

## Beschreibung

Die Erfindung betrifft ein Rahmenelement zur Anbringung im unteren Bereich der Heckscheibe eines Fahrzeugs. Ferner betrifft die Erfindung ein Fahrzeug mit einem derartigen Rahmenelement.

Als Stand der Technik ist aus der DE 44 41 853 A1 ein Kraftfahrzeug mit einem am hinteren Endbereich angeordneten Stoßfänger bekannt, der durch mindestens ein längenveränderbares Halteelement zwischen einer Ruhe- und einer Ausfahrstellung verlagerbar ist, wobei der Stoßfänger in der Ausfahrstellung als Trageeinrichtung für ein Transportgut verwendbar ist. Das Kraftfahrzeug mit dem beschriebenen Stoßfänger eignet sich zum Transport von auf dem Stoßfänger abstellbaren Transportgütern.

Der Erfindung liegt die Aufgabe zugrunde, ein Rahmenelement zur Anbringung an einem Fahrzeug anzubieten, welches eine besonders vielseitige Verwendung des Fahrzeugs als Gepäckträger ermöglicht. Ferner liegt der Erfindung die Aufgabe zugrunde, ein Fahrzeug mit einem derartigen Rahmenelement anzubieten.

Die Aufgabe wird für das Rahmenelement durch die Merkmale des Patentanspruchs 1 gelöst. Vorteilhafte Ausführungsformen des Rahmenelements sind in den Ansprüchen 2 - 11 beschrieben. Für das Fahrzeug wird die Aufgabe durch die Merkmale des Patentanspruchs 12 gelöst.

Das erfindungsgemäße Rahmenelement ist zur Anbringung im unteren Bereich der Heckscheibe eines Fahrzeugs vorgesehen, wobei das Rahmenelement in einer ersten Anbringungsposition die Heckscheibe teilweise oder vollständig umrahmend am Fahrzeug anbringbar ist und in einer zweiten Anbringungsposition im wesentlichen horizontal (also ausgefahren oder ausgeklappt) zur Verwendung als Gepäckträger am Fahrzeug anbringbar ist.

Das erfindungsgemäße Rahmenelement kann bei Nichtgebrauch besonders platzsparend und formschön in den Heckbereich sowie den Bereich der Heckscheibe des Fahrzeugs integriert werden. Bei Bedarf kann das Rahmenelement ausgezogen oder ausgeklappt werden und bietet durch seine erhöhte Anbringung im unteren Bereich der Heckscheibe die Möglichkeit auch sperrige und größere Ladegüter zu transportieren.

Vorteilhafterweise ist das Rahmenelement bügelartig ausgebildet und kann mit geringem Platzaufwand bei Nichtgebrauch in der ersten Anbringungsposition am oder im Fahrzeug verstaut werden, Durch eine bügelartige Ausgestaltung können Ladegüter auch besonders sicher mehrseitig umfaßt werden.

Nach einer weiteren vorteilhaften Ausführungsform ist das Rahmenelement über Gelenke am Fahrzeug schwenkbar angebracht, so daß das Rahmenelement bei Nichtgebrauch in der ersten Anbringungsposition platzsparend im wesentlichen an die Außenseite des Fahrzeugs angeklappt werden kann. Der Innenraum des Fahrzeugs bleibt zur freien Verfügung für andere Verwendungsmöglichkeiten.
Zum sicheren Transport bei Nichtgebrauch und Gebrauch des Rahmenelements kann dieses vorteilhafterweise in der ersten und/oder zweiten Anbringungsposition am Fahrzeug arretiert werden.

Um die Heckscheibe in einem größtmöglichen Bereich zur Durchsicht freizuhalten, kann es vorteilhaft sein, das Rahmenelement in der ersten Anbringungsposition bei Nichtgebrauch in das Fahrzeug zur Versenkung hineinzuschieben. Das Rahmenelement verschwindet dann bei Nichtgebrauch zumindest teilweise im Inneren des Fahrzeugs, ohne daß der Öffnungsbereich der Heckscheibe gemindert wird.

Durch die Integration des Rahmenelementes in der ersten Anbringungsposition bei Nichtgebrauch in die Karosserie des Fahrzeugs wird ein formschöner Gesamteindruck des Fahrzeugs ermöglicht. Dem Fahrzeug kann auf dem ersten Blick nicht angesehen werden, daß im Heckbereich bzw. im unteren Bereich der Heckscheibe ein ausklappbares oder ausziehbares Rahmenelement zur Verwendung als Gepäckträger vorgesehen ist.

Die Möglichkeiten der Beförderung von Transportgütern werden durch ein weiteres Rahmenelement zur gemeinsamen Verwendung mit dem bisherigen Rahmenelement erweitert. Das weitere Rahmenelement ist auch im Heckbereich des Fahrzeugs angebracht und kann gemeinsam mit dem ersten Rahmenelement eine besonders vielseitige Befestigung und Beförderung von Transportgütern ermöglichen.

Das weitere Rahmenelement kann in einer ersten Anbringungsposition an das Fahrzeug anklappbar oder im Fahrzeug versenkbar sein. In dieser ersten Anbringungsposition ist das weitere Rahmenelement nicht im Gebrauch und kann somit platzsparend am oder im Fahrzeug untergebracht werden.

In einer zweiten Anbringungsposition bei Gebrauch als Gepäckträger kann das weitere Rahmenelement im wesentlichen horizontal am Fahrzeug angebracht werden.

Durch Zusammenwirken der beiden Rahmenelemente können Transportgüter besonders vielseitig befestigt und transportiert werden.

Das erfindungsgemäße Fahrzeug besitzt ein Rahmenelement in den beschriebenen Ausführungsformen und kann bei Nichtgebrauch der Rahmenelemente als herkömmliches Fahrzeug verwendet werden. Falls die Notwendigkeit des Transports von Ladegütern besteht, kann das erfindungsgemäße Rahmenelement aus dem Fahrzeug herausgezogen oder von diesem abgeklappt werden, so daß innerhalb kurzer Zeit ein Fahrzeug mit deutlich erweiterten Transportmöglichkeiten entsteht.

Weitere Merkmale und Vorteile der vorliegenden Erfindung ergeben sich aus der nachfolgenden Beschreibung und anhand von Ausführungsbeispielen in den Zeichnungsfiguren. Es zeigen:
- Fig. 1: ein Fahrzeug mit Rahmenelement in einer zweiten Anbringungsposition zur Verwendung als Gepäckträger,
- Fig. 2: ein Fahrzeug nach Fig. 1 mit Rahmenelementen in einer ersten Anbringungsposition bei Nichtgebrauch als Gepäckträger,
- Fig. 3: ein Fahrzeug nach Fig. 2 mit einer weiteren Ausführungsform eines Rahmenelements,
- Fig. 4: ein Fahrzeug nach Fig. 1 - 3 mit an den Rahmenelementen befestigter Ladung, sowie
- Fig. 5: eine weitere Ausführungsform eines Fahrzeuges mit Rahmenelementen in einer zweiten Anbringungsposition.

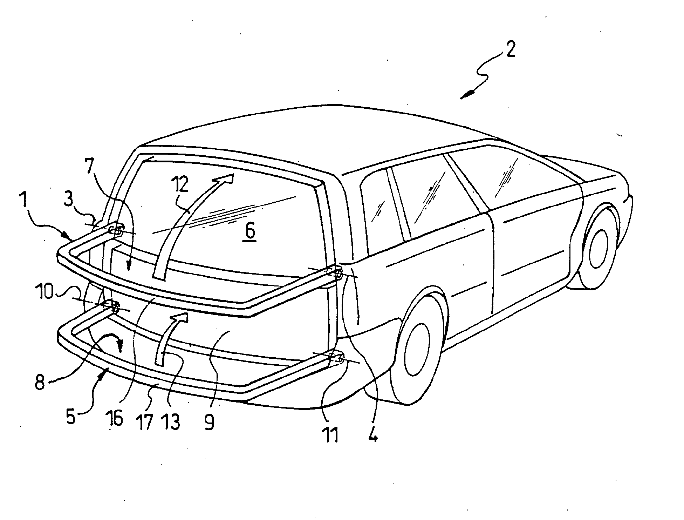

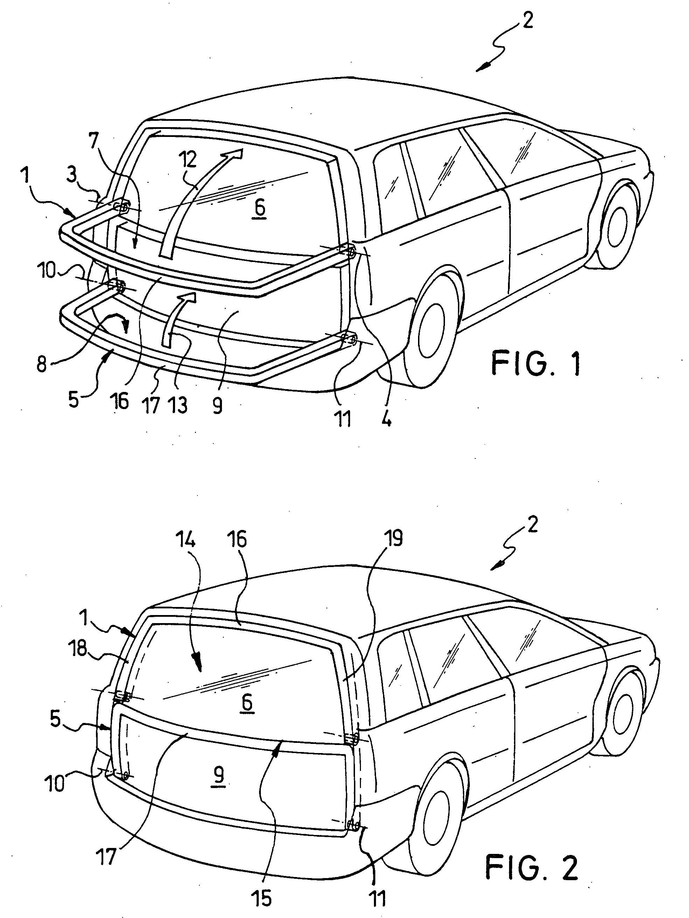

Fig. 1 zeigt ein Fahrzeug 2 mit einem ersten schematisch dargestellten Rahmenelement 1 (z.B. einem Rohrelement) in einer zweiten Anbringungsposition im wesentlichen horizontal zur Verwendung als Gepäckträger. Ferner ist ein weiteres schematisch dargestelltes Rahmenelement 5 ebenfalls in einer zweiten Anbringungsposition im wesentlichen horizontal ebenfalls zur Verwendung als Gepäckträger, insbesondere in Verbindung mit dem Rahmenelement 1 abgebildet. Die Rahmenelemente 1, 5 sind bügelartig ausgebildet und dienen in der abgebildeten zweiten Anbringungsposition auch als Kollisionsschutz.

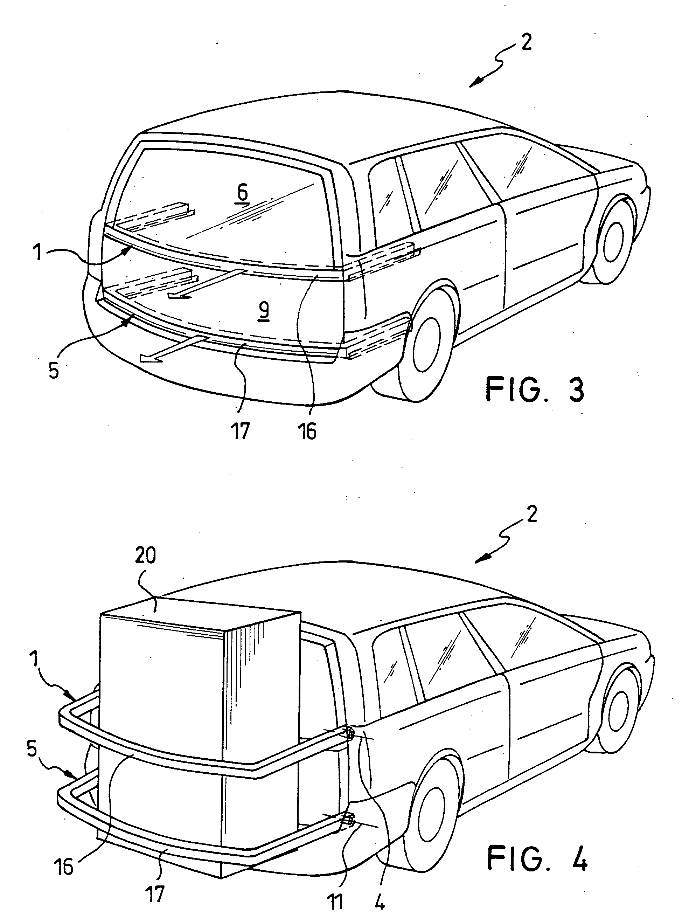

In den gemäß Fig. 1 bestehenden Zwischenräumen 7, 8 zwischen dem Rahmenelement 1 bzw. dem Rahmenelement 5 und dem Heckbereich 9 des Fahrzeugs 2 können auf an sich bekannte Weise z.B. durch Gurte, Schraub- oder sonstige Verbindung Ladegüter zum Transport am Fahrzeug 2 aufgenommen werden (vgl. Fig. 4).

In Fig. 1 und 2 sind die Rahmenelemente 1, 5 über schematisch dargestellte Gelenke 3, 4 bzw. 10, 11 am Fahrzeug 2 angebracht und in Richtungen 12, 13 an das Fahrzeug 2 heranklappbar. Dabei ist insbesondere das Rahmenelement 1 derartig an das Fahrzeug 2 heranklappbar, daß die Heckscheibe 6 des Fahrzeugs 2 umrahmt wird. Damit verbleibt ein Durchsichtbereich 14 der Heckscheibe 6 zur ungehinderten Benutzung. Das Rahmenelement 1 ist im unteren Bereich 15 der Heckscheibe 6 angebracht und kann gemäß Fig. 2 an die Heckscheibe 6 in der ersten Anbringungsposition bei Nichtgebrauch herangeklappt und damit formschön in den rückseitigen Karosserieverlauf des Fahrzeugs 2 eingepaßt werden.

Nach einer weiteren Ausführungsform gemäß Fig. 3 können die Rahmenelemente 1, 5 auch bei Nichtgebrauch in der ersten Anbringungsposition in das Fahrzeug 2 hineinverschoben werden, so daß nur noch die Querholme 16, 17 der Rahmenelemente 1, 5 in der ersten Anbringungsposition von außen einsehbar sind. Hierdurch werden die Rahmenelemente 1, 5 bei Nichtgebrauch ebenfalls formschön in den hinteren Karosserieverlauf des Fahrzeugs 2 integriert. Der Durchsichtbereich 14 der Heckscheibe 6 bleibt praktisch unverändert erhalten.

In der Ausführungsform gemäß Fig. 2 wird die Heckscheibe 6 durch den Querholm 16 und die Längsholme 18,19 des Rahmenelements 1 umrahmt.

In der Ausführungsform gemäß Fig. 3 findet eine teilweise Umrahmung der Heckscheibe 6 durch den Querholm 16 des Rahmenelements 1 statt.

Fig. 4 zeigt die Anbringung von Ladung 20 an in zweiten Anbringungspositionen befindlichen Rahmenelementen 1, 5. Die Ladung 20 ist auf an sich bekannte Weise durch Gurte, Schraubverbindungen oder sonstige Verbindungen an den Rahmenelementen 1, 5 anbringbar (nicht näher abgebildet).

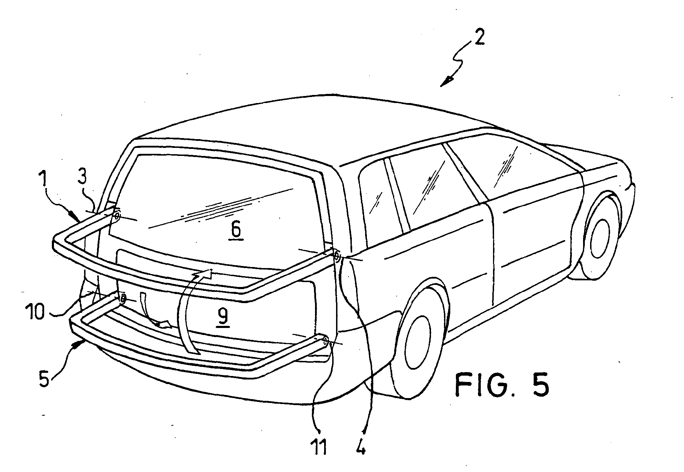

Fig. 5 zeigt eine weitere Ausführungsform der Erfindung. Das obere Rahmenelement 1 ist mittels Gelenken 3, 4 im unteren Bereich der Heckscheibe 6 angeordnet. Das untere Rahmenelement 5 ist mittels Gelenken 10, 11 im unteren Heckbereich 9 des Fahrzeugs 2 angeordnet. In Gebrauchsstellung sind somit das obere Rahmenelement 1 und das untere Rahmenelement 5 wie bereits zu Fig. 1 beschrieben anordnenbar.

Im Gegensatz zu dem in Fig. 1 beschriebenen Ausführungsbeispiel jedoch sind das obere Rahmenelement 1 und das untere Rahmenelement 5 gegeneinander klappbar, wie durch die beiden Pfeile in Fig. 5 angedeutet. Hierzu weist das untere Rahmenelement 5 eine gegenüber dem oberen Rahmenelement 1 reduzierte Breite und Höhe auf. Bei Nichtgebrauch schwenken das untere Rahmenelement 5 mittels der schematisch dargestellten Gelenke 10, 11 nach oben und das obere Rahmenelement 1 mittels der schematisch dargestellten Gelenke 3, 4 nach unten (statt nach oben die Heckscheibe umrahmend). Damit sind die beiden Rahmenelemente 1, 5 glatt an der Fahrzeugheckklappe und gegebenenfalls auch gegeneinander anliegend angebracht. Der Querholm des Rahmenelementes 1 liegt in Ruhestellung über dem Querholm des Rahmenelementes 5 unterhalb der Heckscheibe 6.

Hiermit ergibt sich in vorteilhafter Weise eine optisch ansprechende, den Durchsichtsbereich der Heckscheibe 6 freigebende Anordnung der erfindungsgemäßen Rahmenelemente 1 und 5.

### BEZUGSZEICHEN

- 1: Rahmenelement
- 2: Fahrzeug
- 3, 4: Gelenk
- 5: Rahmenelement
- 6: Heckscheibe
- 7, 8: Zwischenraum
- 9: Heckbereich
- 10, 11: Gelenk
- 12, 13: Richtung
- 14: Durchsichtbereich
- 15: unterer Bereich
- 16, 17: Querholm
- 18, 19: Längsholm
- 20: Ladung

## Patentansprüche

1. Rahmenelement (1) zur Anbringung im unteren Bereich (15) einer Heckscheibe (6) eines Fahrzeugs (2), wobei das Rahmenelement (1) in einer ersten Anbringungsposition die Heckscheibe (6) umrahmend oder dem unteren Bereich (15) seiner Heckklappe (9) zugewandt am Fahrzeug (2) anbringbar und in einer zweiten Anbringungsposition im wesentlichen horizontal zur Verwendung als Gepäckträger am Fahrzeug (2) anbringbar ist.

2. Rahmenelement (1) nach Anspruch 1, wobei das Rahmenelement (1) bügelartig ausgebildet ist.

3. Rahmenelement (1) nach Anspruch 1 oder 2, wobei das Rahmenelement (1) über Gelenke (3, 4) am Fahrzeug (2) schwenkbar angebracht ist.

4. Rahmenelement (1) nach einem der vorhergehenden Ansprüche, wobei das Rahmenelement (1) in der ersten Anbringungsposition am Fahrzeug (2) arretierbar ist.

5. Rahmenelement (1) nach einem der vorhergehenden Ansprüche, wobei das Rahmenelement (1) in der zweiten Anbringungsposition am Fahrzeug (2) arretierbar ist.

6. Rahmenelement (1) nach einem der vorhergehenden Ansprüche, wobei das Rahmenelement (1) in das Fahrzeug (2) zur Versenkung hineinschiebbar ist.

7. Rahmenelement (1) nach einem der vorhergehenden Ansprüche, wobei das Rahmenelement (1) in der ersten Anbringungsposition in die Karosserie des Fahrzeugs (2) integriert ist.

8. Rahmenelement (1) nach einem der vorhergehenden Ansprüche, wobei ein weiteres Rahmenelement (5) zur gemeinsamen Verwendung mit dem Rahmenelement (1) als Gepäckträger am Fahrzeug (2) angebracht ist.

9. Rahmenelement (1) nach Anspruch 8, wobei das Rahmenelement (5) in einer ersten Anbringungsposition an das Fahrzeug (2) anklappbar oder im Fahrzeug (2) versenkbar ist.

10. Rahmenelement (1) nach Anspruch 8 oder 9, wobei das Rahmenelement (5) in einer zweiten Anbringungsposition im wesentlichen horizontal zur Verwendung als Gepäckträger am Fahrzeug (2) anbringbar ist.

11. Rahmenelement (1) nach einem der Ansprüche 8 bis 10, dergestalt dass das Rahmenelement (1) und das Rahmenelement (5) ineinander verschwenkbar sind.

12. Fahrzeug (2) mit einem Rahmenelement (1) nach einem der Ansprüche 1 - 11.
